(19) Europäisches Patentamt
European Patent Office
Office européen des brevets

(11) **EP 2 578 988 A1**

(12) **EUROPÄISCHE PATENTANMELDUNG**

(43) Veröffentlichungstag:
**10.04.2013 Patentblatt 2013/15**

(51) Int Cl.:
***G01B 9/02*** (2006.01)   ***G01B 11/24*** (2006.01)

(21) Anmeldenummer: **12186888.9**

(22) Anmeldetag: **01.10.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **07.10.2011 DE 102011115027**

(71) Anmelder: **Polytec GmbH**
**76337 Waldbronn (DE)**

(72) Erfinder:
• **Rembe, Christian**
  **76337 Waldbronn (DE)**
• **Boedecker, Sebastian**
  **76137 Karlsruhe (DE)**
• **Grittmann, Markus**
  **76149 Karlsruhe (DE)**

(74) Vertreter: **Lemcke, Brommer & Partner**
**Patentanwälte**
**Bismarckstraße 16**
**76133 Karlsruhe (DE)**

(54) **Kohärenzrasterinterferometer und Verfahren zur ortsaufgelösten optischen Vermessung der Oberflächengeometrie eines Objekts**

(57) Die Erfindung betrifft ein Kohärenzrasterinterferometer zur ortsaufgelösten optischen Vermessung der Höhengeometriedaten eines Objekts, umfassend eine Lichtquelle, ein Interferometer, eine Weglängenänderungseinheit und eine Kamera mit einer Detektionsfläche, welche Detektionsfläche eine Vielzahl von ortsverschiedenen Photosensoren aufweist, wobei das Interferometer mit der Lichtquelle und der Kamera derart zusammenwirkend ausgebildet ist, dass ein von der Lichtquelle erzeugter Ausgangsstrahl in einen Mess- und einen Referenzstrahl aufgespalten, der Messstrahl auf flächig auf das Objekt auftrifft und der von dem Objekt zumindest teilweise reflektierte und/oder gestreute Messstrahl auf die Detektionsfläche der Kamera abgebildet wird und über einen Strahlteiler derart mit dem Referenzstrahl überlagert wird, dass der überlagert Mess- und Referenzstrahl die Vielzahl von Photosensoren flächig überdecken, und wobei die optische Weglängenänderungseinheit ausgebildet ist zur Änderung der optischen Weglänge des Mess- und/oder Referenzstrahl.

Die Erfindung ist dadurch gekennzeichnet, dass die Weglängenänderungseinheit eine Wegskala und einen Wegdetektor aufweist, welche derart angeordnet sind, dass bei Änderung der optischen Weglänge des Mess- und/oder Referenzstrahls durch die Weglängenänderungseinheit eine synchrone Bewegung des Wegdetektors relativ zur Wegskala erfolgt und die Interferogrammaufnahmen mit der Wegmessung synchronisiert sind. Die Erfindung betrifft weiterhin ein Verfahren zur ortsaufgelösten optischen Vermessung der Höhengeometriedaten eines Objekts.

Figur 1

**Beschreibung**

Die Erfindung betrifft ein Kohärenzrasterinterferometer zur ortsaufgelösten optischen Vermessung von Höhengeometriedaten eines Objekts gemäß Oberbegriff des Anspruchs 1 sowie ein Verfahren zur ortsaufgelösten Vermessung des Oberflächenprofils eines Objekts mittels eines Kohärenzrasterinterferometers gemäß Oberbegriff des Anspruchs 10,

Die ortsaufgelöste optische Vermessung der Höhengeometriedaten eines Objekts mittels eines Kohärenzrasterinterferometers ist an sich bekannt:

Hierbei wird ein von einer Lichtquelle erzeugter Lichtstrahl mittels eines Interferometers in einen Mess- und Referenzstrahl aufgespaltet, der Messstrahl flächig auf das zu vermessende Objekt geleitet und der von dem Objekt zumindest teilweise reflektierte und/oder gestreute Messstrahl wird auf einer Detektionsfläche einer Kamera mit dem Referenzstrahl überlagert. Die Kamera weist eine Vielzahl von Photosensoren, typischerweise einen CCD-Chip, auf, sodass jedem Photosensor, beispielsweise jedem Pixel des CCD-Chips, ein Messpunkt auf dem Objekt zugeordnet ist.

Mittels einer optischen Weglängenänderungseinheit wird die Weglänge des Mess- oder Referenzstrahls verändert. Dies erfolgt typischerweise durch Verfahren des gesamten Kohärenzrasterinterferometers relativ zu dem Objekt.

Das Kohärenzrasterinterferometer weist eine inkohärente Lichtquelle auf, sodass nur dann ein Interferenzsignal auf einem Photosensor der Kamera erzeugt wird, wenn die optischen Wege für Referenz- und Messstrahl abgeglichen sind. Durch Ermittlung der Position des Interferometers, bei welcher ein maximaler Interferenzkontrast für den jeweiligen Photosensor vorliegt, kann somit jedem Photosensor eine Höheninformation zugeordnet werden und somit können Höhengeometriedaten des Objekts ermittelt werden.

Ein Kohärenzrasterinterferometer zeichnet sich somit gegenüber einem mikroskopischen Aufbau insbesondere durch die Abbildung eines großflächigen Messbereiches auf eine Vielzahl von Photosensoren aus. Ein Kohärenzrasterinterferometer ist beispielsweise in DE 10 2005 023 212 beschrieben.

Der vorliegenden Erfindung liegt die Aufgabe zugrunde, das vorbekannte Kohärenzrasterinterferometer und das vorbekannte Verfahren zur ortsaufgelösten optischen Vermessung der Höhengeometriedaten eines Objekts mittels eines Kohärenzrasterinterferometers hinsichtlich der Messgenauigkeit und/oder der Reproduzierbarkeit der Messeigenschaften zu verbessern.

Gelöst ist diese Aufgabe durch ein Kohärenzrasterinterferometer gemäß Anspruch 1 sowie ein Verfahren zur ortsaufgelösten optischen Vermessung der Höhengeometriedaten eines Objekts gemäß Anspruch 10. Vorteilhafte Ausgestaltungen des erfindungsgemäßen Kohärenzrasterinterferometers finden sich in den Ansprüchen 2 bis 9 und des erfindungsgemäßen Verfahrens in den Ansprüchen 11 bis 15. Hiermit wird der Wortlaut sämtlicher Ansprüche explizit per Referenz in die Beschreibung eingebunden.

Das erfindungsgemäße Kohärenzrasterinterferometer zur ortsaufgelösten optischen Vermessung der Höhengeometriedaten eines Objekts umfasst eine Lichtquelle, ein Interferometer, eine Weglängenänderungseinheit und eine Kamera mit einer Detektionsfläche. Die Detektionsfläche der Kamera weist eine Vielzahl von ortsverschiedenen Photosensoren auf.

Das Interferometer ist mit der Lichtquelle und der Kamera derart zusammenwirkend ausgebildet, dass ein von der Lichtquelle erzeugter Ausgangsstrahl in einen Mess- und einen Referenzstrahl aufgespaltet wird. Der Messstrahl trifft flächig auf das Objekt auf und der von dem Objekt zumindest teilweise reflektierte und/oder gestreute Messstrahl wird wieder in den Strahlengang des Interferometers eingekoppelt und mit dem Referenzstrahl auf der Detektionsfläche der Kamera derart überlagert, dass der überlagerte Mess- und Referenzstrahl die Vielzahl von Photosensoren flächig überdecken. Das wird erreicht indem mit einem Objektiv und vorzugsweise über einen Strahlteiler das Messobjekt und eine Referenzebene auf das Feld aus Photosensoren der Kamera abgebildet werden. Dies entspricht somit dem an sich bekanntem Aufbau eines Kohärenzrasterinterferometers, bei welchem eine von dem Messstrahl bedeckte Messfläche auf dem Objekt mit dem Referenzstrahl auf die Detektionsfläche der Kamera überlagert wird, sodass jedem Photosensor der Kamera ein jeweils ortsverschiedener Messpunkt innerhalb der Messfläche auf dem Objekt zugeordnet ist.

Weiterhin ist die optische Weglängenänderungseinheit ausgebildet zur Änderung der optischen Weglänge des Mess- und/oder Referenzstrahls. Dies entspricht ebenfalls dem an sich bekannten Aufbau, dass mittels einer optischen Weglängenänderungseinheit das Verhältnis der Weglängen zwischen Mess- und Referenzstrahl verändert werden kann, sodass insbesondere ein Abgleich der Weglängen bei maximalem Interferenzkontrast für jeden einzelnen Photosensor und somit jedem Messpunkt auf dem Objekt innerhalb der Messfläche möglich ist.

Wesentlich ist, dass die Weglängenänderungseinheit des erfindungsgemäßen Kohärenzrasterinterferometers eine Wegskala und einen Wegdetektor umfasst. Wegskala und Wegdetektor sind derart angeordnet, dass Veränderungen der optischen Weglänge des Mess- und/oder Referenzstrahls durch die Weglängenänderungseinheit eine synchrone Bewegung des Wegdetektors relativ zur Wegskala erfolgt.

Die Erfindung ist in der Erkenntnis des Anmelders begründet, dass bei vorbekannten Kohärenzrasterinterferometern die Ungenauigkeit in der Bestimmung der optischen Weglänge bzw. der Änderung der optischen Weglänge zur Erzielung eines Weglängenabgleichs zwischen Mess- und Referenzstrahl für einen bestimmten Photosensor und den zugeordneten Messpunkt auf dem Objekt einen entscheidenden Einfluss auf die gesamte Messgenauigkeit sowie die Möglichkeit zur Beschleunigung des Messverfahrens zur Zeitersparnis hat. Bisher wurden andere Parameter oder Elemente des Kohärenzrasterinterferometers zur Erhöhung der Messgenauigkeit optimiert, überraschenderweise zeigte sich jedoch, dass eine Erhöhung der Messgenauigkeit bei der optischen Weglängenänderung die Gesamtmessgenauigkeit erheblich verbessert.

Bei bisherigen Kohärenzrasterinterferometern erfolgte die Änderung der optischen Weglänge typischerweise durch motorisches Antreiben einer Spindel, mittels welcher das Kohärenzrasterinterferometer relativ zum Objekt linear verschoben wurde. Hierbei wurde die Umdrehungszahl der Spindel ermittelt, um hieraus auf die Änderung der optischen Weglänge zu schließen.

Bei dem erfindungsgemäßen Kohärenzrasterinterferometer weist die Weglängenänderungseinheit hingegen eine von den mechanischen Antriebskomponenten separate Wegskala und einen Wegdetektor auf. Hierdurch ist bereits durch Verwendung handelsüblicher Skalen und zugeordneter Detektoren eine erhebliche Verbesserung der Genauigkeit der Bestimmung der Weglängenänderung möglich.

Mit dem erfindungsgemäßen Kohärenzrasterinterferometer wird somit in konstruktiv vorteilhafter, unaufwendiger Weise durch zusätzliches Vorsehen einer Wegskala und eines Wegdetektors die Messgenauigkeit erheblich erhöht.

Das erfindungsgemäße Verfahren zur ortsaufgelösten Vermessung der Höhengeometriedaten eines Objekts mittels eines Kohärenzrasterinterferometers wird vorzugsweise mittels des erfindungsgemäßen Kohärenzrasterinterferometers bzw. einer vorteilhaften Ausführungsform hiervon durchgeführt. Ebenso ist das erfindungsgemäße Kohärenzrasterinterferometer vorzugsweise zur Durchführung des erfindungsgemäßen Verfahrens bzw. einer vorteilhaften Ausführungsform hiervon ausgebildet.

Das erfindungsgemäße Verfahren umfasst folgende Verfahrensschritte:

In einem Verfahrensschritt A erfolgt ein Aufspalten eines von der Lichtquelle erzeugten Ausgangsstrahls in einen Mess- und Referenzstrahl, wobei der Referenzstrahl flächig auf das Objekt auftrifft und der zumindest teilweise reflektierte und/oder gestreute Messstrahl flächig mit dem Referenzstrahl auf eine Detektionsfläche einer Kamera überlagert wird, welche Detektionsfläche eine Vielzahl ortsverschiedener Photosensoren aufweist.

In einem Verfahrensschritt B erfolgt ein Ändern der optischen Weglänge des Mess- und/oder Referenzstrahls und eine Aufnahme von Messbildern mittels der Kamera für mehrere unterschiedliche Weglängen von Mess- und/oder Referenzstrahl.

In einem Verfahrensschritt C erfolgt ein Bestimmen der Höhengeometriedaten des Objekts anhand der Messsignale der Detektoren für die mehreren Messbilder.

Dies entspricht dem an sich bekannten Verfahren, dass für unterschiedliche Verhältnisse der optischen Weglängen zwischen Mess- und Referenzstrahl Messbilder mittels der Kamera aufgenommen werden und somit für jeden Photosensor und dadurch auch für jeden jeweils zugeordneten Messpunkt auf dem Objekt die Aufnahme mit dem maximalen Interferenzkontrast bestimmt werden kann und durch Zuordnung der entsprechenden Änderung der optischen Weglänge Höhengeometriedaten des Objekts erstellt werden kann.

Wesentlich ist, dass bei dem erfindungsgemäßen Verfahren in Verfahrensschritt B synchron zur Änderung der optischen Weglänge ein Wegdetektor relativ zu einer Wegskala verschoben wird und anhand der Messsignale des Wegdetektors jedem Messbild eine Weginformation zugeordnet wird.

Hierdurch ergibt sich der bereits vorbeschriebene Vorteil, dass aufgrund der separaten Messung der Weglängenänderung mittels der Wegskala und des zugeordneten Wegdetektors eine erhebliche Erhöhung der Genauigkeit und der Messung der Änderung der optischen Weglänge erzielt wird.

Vorzugsweise wird als Wegskala eine geradlinige Skala verwendet. Diese weist den Vorteil auf, dass einerseits solche Skalen bereits handelsüblich erhältlich sind und in konstruktiv einfacher Weise eine Zuordnung der Verschiebung des Wegdetektors relativ zu der geradlinigen Skala und der hierbei erfolgten Weglängenänderung möglich ist. Insbesondere sind hochgenaue geradlinige Glasmaßstäbe handelsüblich erhältlich. Die Detektion der Verschiebung des Wegdetektors relativ zur Wegskala kann in an sich bekannter Weise, insbesondere optisch, kapazitiv oder elektromagnetisch erfolgen.

Insbesondere ist die Verwendung einer nicht temperatursensitiven geradlinigen Skala vorteilhaft, d.h. einer Skala, welche bei Temperaturschwankungen keine oder nur geringfügige Längenausdehnungen aufweist. Auch hierbei sind Glasmaßstäbe vorteilhaft.

Die Weglängenänderungseinheit kann in an sich bekannter Weise ausgebildet sein. Insbesondere liegt es im Rahmen der Erfindung, dass mittels der Weglängenänderungseinheit ein Spiegel im Strahlengang des Referenzstrahls oder des Messstrahls verschoben wird, sodass sich die optische Weglänge des jeweiligen Strahls ändert. Insbesondere ist es vorteilhaft, die Weglängenänderungseinheit zur linearen Verschiebung des Kohärenzrasterinterferometers relativ zu dem Objekt auszubilden. Hierbei liegt es im Rahmen der Erfindung, bei ortsfestem Kohärenzrasterinterferometer das Objekt zu verschieben oder in kinematischer Umkehr bei ortsfestem Objekt das Kohärenzrasterinterferometer zu verschieben. Es ist bekannt, dass vorzugsweise bei ortsfestem Objekt das Kohärenzrasterinterferometer linear verschoben wird, da hierbei eine besonders flexible und vielseitige Ausgestaltung der Objekthalterung möglich ist. Insbesondere können austauschbare Objekthalterungen verwendet werden, wohingegen das Kohärenzrasterinterferometer stets auf der gleichbleibenden linearen Verschiebungseinheit der optischen Weglängenänderungseinheit ruht.

Untersuchungen des Anmelders haben ergeben, dass bei Ausbildung der Weglängenänderungseinheit zur linearen Verschiebung des Kohärenzrasterinterferometers relativ zu dem Objekt oder zur linearen Verschiebung eines optischen Spiegels im Strahlengang eines Mess- und Referenzstrahls es vorteilhaft ist, dass die Wegskala entlang der Richtung der linearen Verschiebung angeordnet ist. Bei Änderung der optischen Weglänge erfolgt somit eine Verschiebung der Wegskala oder des Wegdetektors parallel zur linearen Verschiebung des Objekts, des Kohärenzrasterinterferometers oder des optischen Spiegels vom Strahlengang des Mess- und/oder Referenzstrahls.

Hierdurch wird eine zusätzliche Erhöhung der Genauigkeit erzielt, da etwaige Ungenauigkeiten in der Einheit zur linearen Verschiebung, beispielsweise durch Spiel bei einem Spindelantrieb, nicht zu einer Messungenauigkeit führen, da die tatsächlich erfolgte lineare Verschiebung mittels der Wegskala und des Wegdetektors ermittelt wird, unabhängig davon, ob diese lineare Verschiebung durch eine mechanisch bedingte Ungenauigkeit variiert oder nicht.

Darüber hinaus haben etwaige Verschiebungen mit einer Komponente senkrecht zur linearen Verschiebung im Allgemeinen nur einen geringen Einfluss auf die Änderung der optischen Weglänge. Durch die zuvor beschriebene vorzugsweise Anordnung der Wegskala parallel zur Richtung der linearen Verschiebung ist auch eine Verschiebung senkrecht zur linearen Verschiebungsrichtung und somit ebenfalls senkrecht zur Längserstreckung der Wegskala und bewirkt somit keinen oder nur einen sehr geringen Einfluss auf die Messung der Änderung der optischen Weglänge.

Vorzugsweise ist das erfindungsgemäße Kohärenzrasterinterferometer derart ausgeführt, dass die Strahlengänge von Mess- und Referenzstrahl in einer Ebene liegen. Hierdurch ist es insbesondere möglich, in vorteilhafter Weise die Wegskala in dieser Ebene der Strahlengänge anzuordnen. Hierdurch ergibt sich eine Erhöhung der Messgenauigkeit, da Bewegungen und insbesondere lineare Bewegungen in der Ebene der Strahlengänge durch die Wegskala ermittelt werden und Bewegungen außerhalb der Ebene der Strahlengänge, welche auch nur einen geringen Einfluss auf die Änderung der optischen Weglänge haben, entsprechend auch nur einen geringen Einfluss auf die Messung der Änderung der optischen Weglänge mittels Wegskala und Wegdetektor aufweisen.

Vorzugsweise wird die Wegskala parallel zur optischen Achse des Messstrahls zwischen Interferometer und Objekt oder parallel zur optischen Achse des Messstrahls zwischen Interferometer und einem Umlenkspiegel zum Umlenken des Messstrahls auf das Objekt angeordnet. Insbesondere ist es vorteilhaft, dass die optische Achse des Messstrahls und die Längserstreckung der Wegskala einen Abstand < 1 cm, bevorzugt < 2 mm, weiter bevorzugt < 1 mm aufweisen. Auch hierdurch wird die Messgenauigkeit aufgrund der zuvor genannten Zusammenhänge erzielt: Solche Änderungen, welche die Weglänge des Messstrahls betreffen, werden bei dieser Konfiguration von der Wegmessung mittels Wegskala und Wegdetektor erfasst, wohingegen solche Bewegungen, die keine oder nur geringe Änderung der optischen Weglänge bewirken, haben entsprechend auch keine oder nur eine geringe Auswirkung auf die Messung der optischen Weglängenänderung. Der zuvor definierte Abstand ist als ein Abstand zwischen zwei parallelen Linien im mathematischen Sinne zu sehen, das heißt der Abstand, der durch die kürzeste senkrecht zu den Linien zwischen den Linien verlaufende Gerade gebildet wird, wobei die eine Linie durch die optische Achse des Messstrahls und die andere Linie durch die Längserstreckung der Wegskala definiert ist.

Vorzugsweise weist die optische Weglängenänderungseinheit eine Linearführung auf, welche zur linearen Verschiebung zumindest der relevanten optischen Komponenten zur Änderung der optischen Weglänge dient. Diese optischen Komponenten können beispielsweise einen Spiegel umfassen, welcher wie zuvor beschrieben im Strahlengang des Mess- oder Referenzstrahls angeordnet ist und in dieser vorzugsweisen Ausgführungsform mittels der Linearführung verschiebbar ist. Ebenso liegt es im Rahmen der Erfindung, in einer vorzugsweisen Ausführungsform das interferometer oder die wesentlichen Komponenten hiervon mittels der Linearführung relativ zu dem Objekt zu verschieben.

Bei Verwendung einer Linearführung ist es vorteilhaft, wenn auch die Linearführung in der vorgenannten Ebene der Strahlengänge von Mess- und Referenzstrahl liegt und/oder die Wegskala parallel zur Verschiebungsrichtung der Linearführung angeordnet ist.

Vorzugsweise umfasst das Kohärenzrasterinterferometer eine Auswerteeinheit, welche mit dem Detektor und dem Wegdetektor elektrisch verbunden und derart ausgeführt ist, dass eine Synchronisation der Messsignale des Wegdetektors mit den Messsignalen der Kamera erfolgt. Insbesondere ist es vorteilhaft, dass abhängig von den Signalen des Wegdetektors für vorgegebene Wegpositionen eine Aufnahme eines Messbildes mittels der Kamera erfolgt und/oder dass die Auswerteeinheit Triggersignale an die Kamera zur Aufnahme eines Messbildes gibt und gleichzeitig mit Abgeben des Triggersignals die Wegposition abhängig von den Messsignalen des Wegdetektors ermittelt wird. Das erfindungsgemäße Verfahren ist vorzugsweise derart ausgebildet, dass abhängig von den Messsignalen des Wegdetektors für vorgegebene Wegpositionen jeweils ein Messbild aufgenommen wird.

In dieser vorzugsweisen Ausführungsform sind somit Wegpositionen hinsichtlich der Änderung der optischen Weglänge vorgebbar, für welche Wegpositionen jeweils ein Messbild aufgenommen wird. Hierdurch wird eine größere Flexibilität bei Durchführung des Messvorgangs ermöglicht, da die Wegpositionen, welche einer lateralen Höhenprofilsebene auf dem Objekt entsprechen, beliebig vorgebbar sind. Insbesondere ist es möglich, beispielsweise in dem wahrscheinlicherweise relevanten Bereich eine dichtere Abfolge von Wegpositionen zur Bestimmung eines Kamerabildes vorzugeben, sodass hier mit höherer Genauigkeit gemessen wird und bei den weniger relevanten Höhenpositionen in größeren Abständen Kamerabilder aufzunehmen, sodass eine Beschleunigung des Messverfahrens erzielt wird.

Untersuchungen des Anmelders haben gezeigt, dass häufig die Synchronisation zwischen der Änderung der optischen Weglänge und der Aufnahme der Kamerabilder bei vorbekannten Kohärenzrasterinterferometern problematisch ist. Die Abstimmung zwischen der Geschwindigkeit des Antriebssystems zur Änderung der optischen Weglänge einerseits und der damit "synchronisierten" Aufnahme der Kamerabilder, welche insbesondere durch die maximale Aufnahmerate der Kamera bzw. deren Photosensoren, wie beispielsweise ein CCD-Chip mit entsprechender Auswerteeinheit, begrenzt ist, ist bei vorbekannten Systemen häufig nicht gewährleistet.

Dies trifft insbesondere bei kontinuierlichen Messungen zu, d.h. bei Messungen, bei denen mittels der optischen Weglängenänderungseinheit eine zumindest annähernd kontinuierliche Änderung der optischen Weglänge erfolgt und während der kontinuierlichen Änderung eine Vielzahl von Messungen vorgenommen wird. Die Änderung der optischen Weglänge ist hierbei bevorzugt insofern kontinuierlich, dass die Änderung mit einer in etwa konstanten Geschwindigkeit erfolgt, vorzugsweise mit Geschwindigkeitsschwankungen kleiner 10 %, bevorzugt kleiner 5 %, insbesondere kleiner 1 %. Vorzugsweise erfolgen während der kontinuierlichen Weglängenänderung mindestens 15, bevorzugt mindestens 30, weiter bevorzugt mindestens 100 Messungen.

Vorzugsweise weist das erfindungsgemäße Kohärenzrasterinterferometer daher eine Geschwindigkeitssteuerung auf, mittels welcher zumindest eine konstante Geschwindigkeit für die Weglängenänderung wahlweise vorgebbar ist. In dieser vorzugsweisen Ausführungsform kann somit die Geschwindigkeit an die gewünschte Messsituation angepasst werden. Insbesondere ist es möglich, die Geschwindigkeit derart zu wählen, dass für vorgegebene Wegpositionen zur Aufnahme von Messbildern und insbesondere äquidistant vorgegebene Wegpositionen die hierfür notwendige Frequenz zur Aufnahme der Kamerabilder die maximal mögliche Aufnahmefrequenz der Kamera nicht übersteigt. Weiterhin kann vorteilhafter Weise in einer vorzugsweisen Ausführungsform die Ermittlung der Geschwindigkeit der Weglängenänderung durch Auswertung der Messsignale des Wegdetektors erfolgen, da mittels Wegskala und Wegdetektor eine hochgenaue Bestimmung der Weglängenänderung und somit auch eine hochgenaue Bestimmung der Weglängenänderungsgeschwindigkeit in einfacher Weise möglich ist. Die maximal mögliche Kamerabildrate $K_r$[1/s] ist daher vorzugsweise mit der Sollgeschwindigkeit der Weglängenänderungseinheit $v_S$[m/s], dem Soll-z-Weg zwischen 2 Kameraaufnahmen $\Delta z_S$[m] und der maximalen prozentualen z-Geschwindigkeitsschwankung $vp$[%] über die folgende Formel 1 verknüpft:

$$K_r \geq \frac{v_S}{\Delta z_S}\left(\frac{100\% + vp}{100\%}\right) \text{ (Formel 1).}$$

Untersuchungen des Anmelder haben gezeigt, dass $vp$ vorzugsweise im Bereich 5% bis 15% gewählt wird.

Hierbei liegt die an sich übliche Koordinatendefinition zu Grunde, gemäß derer sich das Messobjekt im Wesentlichen in einer xy-Ebene erstreckt und in einer senkrecht zu dieser Ebene stehenden z-Richtung die Höheninformation zur Bestimmung der Höhengeometriedaten ermittelt wird.

Bei dieser vorzugsweisen Ausführungsform folgt bei dem erfindungsgemäßen Verfahren somit die Weglängenänderung mit konstanter Geschwindigkeit und die Kamerabilder können entweder mit einer vorgegebenen Frequenz unter synchroner Bestimmung der Wegpositionen für jedes Kamerabild erfolgen. Ebenso ist es möglich, bei Verfahren konstanter Geschwindigkeit Wegpositionen, insbesondere äquidistante Wegpositionen vorzugeben, an denen jeweils ein Kamerabild aufgenommen wird.

Die Belichtungszeit sollte dabei möglichst kurz gewählt werden, da bei zu langen Belichtungszeiten der Intensitätskontrast der Kamerabilder schlechter wird. Die Belichtungszeit muss allerdings so lang gewählt werden, dass der Dynamikbereich der Kamera (vorzugsweise 8 oder 12 bit) ausgenutzt wird. Vorzugsweise muss die Belichtungszeit $t_{int}$ Formel 2

$$t_{\text{int}} \leq \frac{\lambda_0}{v_S \cdot 16} \qquad \text{(Formel 2)}$$

erfüllen, wobei $\lambda_0$ der mittleren Wellenlänge der Lichtquelle entspricht und $v_s$ der Soll-Vorschubgeschwindigkeit der Weglängenänderungseiheit,

Typische Lichtquellen weisen Wellenlängen im sichtbaren Bereich auf. Insbesondere liegt die Verwendung einer Lichtquelle mit einer mittleren Wellenlänge im sichtbaren Bereich im Rahmen der Erfindung, insbesondere eine mittlere Wellenlänge im Bereich 520 nm bis 540 nm.

Ein Pulsbetrieb der Lichtquelle kann in einer vorzugsweisen Ausführungsform alternativ zur Festlegung der Belichtungszeit verwendet werden, wenn die Kamerabelichtungszeit nicht kurz genug gewählt werden kann. Insbesondere ist es hierbei vorteilhaft, den Pulsbetrieb der Lichtquelle mit der optischen Weglängenänderungseinheit derart zu synchronisieren, dass jeweils bei Erreichen einer vorgegebenen Messposition ein Lichtpuls der Lichtquelle ausgelöst wird.

Vorzugsweise werden bei dem erfindungsgemäßen Verfahren mit einer vorgebenen Frequenz Messbilder mittels der Kamera aufgenommen und jeweils synchron zur Aufnahme des Messbildes wird die Wegposition anhand der Messsignale des Wegdetektors ermittelt. Insbesondere ist hierbei vorteilhaft, dass die vorgegebene Frequenz im Bereich von 80 % - 100 %, bevorzugt im Bereich 90 % - 99 % der maximalen Triggerfrequenz der Photosensoren der Kamera liegt. Bei dieser vorzugsweisen Ausführungsform wird somit eine Optimierung der Messgeschwindigkeit erzielt, da einerseits die Kamerabilder mit der nahezu maximalen Frequenz, mit einem geringen Sicherheitsabschlag, aufgenommen werden und andererseits jedoch auch sichergestellt ist, dass die maximale Aufnahmefrequenz der Kamera nicht überschritten wird.

Alternativ erfolgt in einer vorzugsweisen Ausführungsform des erfindungsgemäßen Verfahrens wie zuvor beschrieben das Ändern der optischen Weglänge in Verfahrensschritt B kontinuierlich mit einer vorgegebenen Geschwindigkeit, welche Geschwindigkeit derart gewählt ist, dass für vorgegebene, äquidistante Wegpositionen Messbilder aufgenommen werden und die Aufnahmefrequenz hierbei kleiner als eine vorgegebene maximale Aufnahmefrequenz der Kamera ist.

Das erfindungsgemäße Kohärenzrasterinterferometer ist wie zuvor beschrieben zur flächigen Abbildung eines Messbereichs zur Überlagerung mit dem Referenzstrahl auf die Detektionsfläche der Kamera ausgebildet. Hierzu weist das erfindungsgemäße Kohärenzrasterinterferometer vorzugsweise am Messstrahlausgang objektseitig eine numerische Apertur < 0,1, bevorzugt < 0,025, weiter bevorzugt kleiner 0,013 auf.

In einer weiteren vorzugsweisen Ausführungsform umfasst das erfindungsgemäße Kohärenzrasterinterferometer in an sich bekannter Weise einen planen Referenzspiegel, welcher Referenzspiegel im Strahlengang des Referenzstrahls angeordnet ist. Insbesondere ist es vorteilhaft, dass die Weglängenänderungseinheit zur linearen Verschiebung des Referenzspiegels bevorzugt parallel zur optischen Achse des Referenzstrahls im Bereich des Referenzspiegels ausgebildet ist. Hierdurch wird in konstruktiv einfacher Weise eine Änderung der optischen Weglänge des Referenzstrahls erzielt.

Die optische Weglängenänderungseinheit umfasst vorzugsweise einen elektrischen Motor. Hierbei ist aufgrund der genauen Ansteuerungsmöglichkeit die Verwendung eines Schrittmotors vorteilhaft. Nachteilig an einem Schrittmotor sind jedoch potentiell auftretenden Gleichfaufschwankungen. Daher wird vorzugsweise ein Schrittmotor mit viskoelastischem Dämpfer vorgesehen, um einen guten Gleichlauf zu gewährleisten. Weiterhin ist es vorteilhaft, die Schrittmotorsteuerung hinsichtlich der Stromlaufkurven für einen guten Gleichlauf auszubilden. Ebenso liegt es im Rahmen der Erfindung, einen elektrischen Gleichstrommotor zu verwenden.

Die Lichtquelle ist vorzugsweise wie bei vorbekannten Kohärenzrasterinterferometern ausgebildet. Insbesondere weist die Lichtquelle vorzugsweise eine Kohärenzlänge < 20 $\mu$m, bevorzugt < 10 $\mu$m auf.

Das erfindungsgemäße Kohärenzrasterinterferometer ist vorzugsweise derart ausgebildet, dass der Messbereich auf dem Objekt, das heißt derjenige von dem Messstrahl auf dem Objekt beaufschlagte Bereich, welcher auf die Detektionsfläche der Kamera abgebildet und mit dem Referenzstrahl überlagert wird, eine rechteckige Fläche von mindestens (16 x 12) mm$^2$, vorzugsweise von mindestens (20x14) mm$^2$, weiter bevorzugt von mindestens (35x25) mm$^2$ überdeckt. Vorzugsweise ist das Kohärenzrasterinterferometers derart ausgebildet, dass mindestens Höhenunterschiede in z-Richtung von 150 $\mu$m, bevorzugt von mindestens 5 mm, weiter bevorzugt von mindestens 50 mm, weiter bevorzugt von mindestens 100 mm messbar sind. Hierdurch wird die Vermessung von Objekten mit einer entsprechend hohen Bandbreite an Höhenpunkten möglich. Insbesondere ist die optische Weglängenänderungseinheit vorzugsweise derart ausgebildet, dass eine Änderung der optischen Weglänge zumindest von 150 $\mu$m, bevorzugt von mindestens 5 mm, weiter bevorzugt von mindestens 50 mm, weiter bevorzugt von mindestens 100 mm durchführbar ist.

Der Messbereich auf dem Objekt und die Referenzebene werden vorzugsweise mittels einer telezentrischen Optik auf das Feld aus Photosensoren der Kamera abegebbildet.

Weitere vorzugsweisen Merkmale und vorzugsweisen Ausführungen des erfindungsgemäßen Kohärenzrasterinterferometers und des erfindungsgemäßen Verfahrens werden im Folgenden anhand von Ausführungsbeispielen und den Figuren erläutert. Dabei zeigt:

Figur 1   eine schematische Darstellung eines erfindungsgemäßen Kohärenzrasterinterferometers in einer Draufsicht;

Figur 2   ein Schnittbild der Darstellung gemäß Figur 1 entlang der in Figur 1 gestrichelt dargestellten Schnittlinie, wobei die Schnittebene senkrecht zur Zeichenebene in Figur 1 verläuft;

Figur 3   ein schematisches Funktionsdiagramm eines ersten Ausführungsbeispiels einer Steuerung des Kohärenzrasterinterferometers;

Figur 4   ein schematisches Funktionsdiagramm eines zweiten Ausführungsbeispiels einer Steuerung des erfindungsgemäßen Kohärenzrasterinterferometers; und

Figur 5   ein schematisches Funktionsdiagramm eines dritten Ausführungsbeispiels der Steuerung des erfindungsgemäßen Kohärenzrasterinterferometers.

In den Figuren bezeichnen Bezugselemente gleiche oder gleichwirkende Elemente.

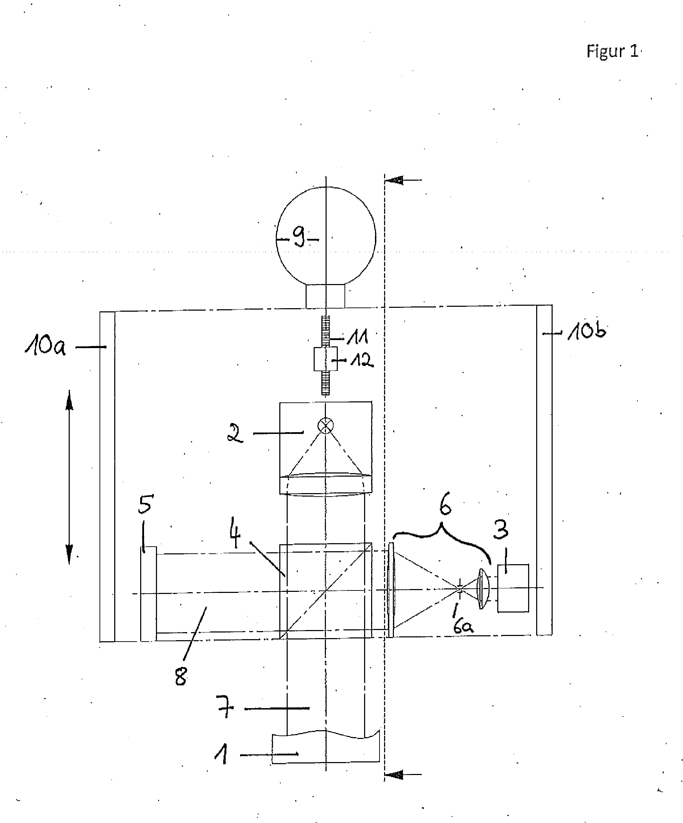

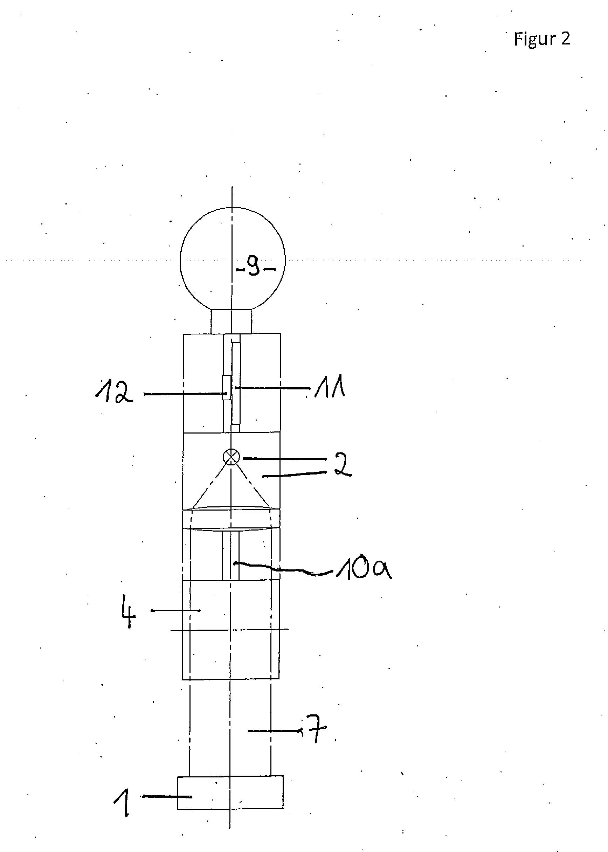

Das in den Figuren 1 und 2 dargestellte Ausführungsbeispiel des erfindungsgemäßen Kohärenzrasterinterferömeters dient zür örtsaufgelösten optischen Vermessung der Höhengeometriedaten eines Objekts 1.

Das Kohärenzrasterinterferometer umfasst eine Lichtquelle 2 sowie eine Kamera 3, welche bevorzugt als CCD-Kamera ausgebildet ist und somit als Detektionsfläche einen CCD-Chip aufweist mit einer Vielzahl von Pixeln, welche Pixel somit eine Vielzahl von Photosensoren darstellen.

Das Kohärenzrasterinterferometer umfasst weiterhin ein Interferometer, welches einen Strahlteiler 4, einen Referenzspiegel 5 sowie eine telezentrische Abbildungsoptik 6 mit einer Lochblende 6a umfasst.

Das Interferometer ist mit der Lichtquelle 2 und der Kamera derart zusammenwirkend ausgebildet, dass ein von der Lichtquelle erzeugter Strahl, welcher durch eine Linsenanordnung der Lichtquelle flächig aufgeweitet wird, mittels des Strahlteilers 4 in einen Messstrahl 7 und einen Referenzstrahl 8 aufgespalten wird. Der Referenzstrahl trifft auf das so vermessene Objekt 1 flächig auf und der zumindest teilweise von dem Objekt 1 reflektierte Messstrahl 7 tritt wieder in den Strahlengang des Interferometers ein und wird über den Strahlteiler und die Abbildungsoptik 6 auf die Detektionsfläche der Kamera 3 abgebildet. Der Referenzstrahl 8 trifft auf den Referenzspiegel 5 auf, durchläuft den Strahlteiler 4 und wird ebenfalls mittels der Abbildungsoptik 6 auf die Kamera 3 abgebildet, sodass auf der Detektionsfläche der Kamera 3 Mess- und Referenzstrahl überlagert sind.

Das Kohärenzrasterinterferometer umfasst weiterhin eine Weglängenänderungseinheit, welche einen Motor 9 und einen - nicht dargestellten - Spindelantrieb umfasst.

Die Lichtquelle 2, die Kamera 3 und die Komponenten des Interferometers sind auf einem gemeinsamen Schlitten angeordnet, welche in der Draufsicht gemäß Figur 1 beidseitig Linearführungen 10a und 10b aufweist. Mittels des Motors 9 kann durch Drehen der Spindel der vorgenannte Schlitten und somit die Komponenten Lichtquelle, Kamera und Interferometer relativ zum Objekt verfahren werden, wobei eine Führung und somit Gewährleistung einer geradlinigen Bewegung durch die Linearführungen 10a und 10b erfolgt. Durch das Verfahren kann somit der Abstand zwischen den optischen Komponenten des Kohärenzrasterinterferometers und dem Objekt 1 vergrößert und verkleinert werden.

Hierdurch erfolgt somit eine Änderung der optischen Weglänge des Messstrahls 7; der Motor 9 und der - nicht dargestellte - Spindelantrieb sind somit Bestandteile einer optischen Weglängenänderungseinheit.

Eine besonders robuste Ausführung ergibt sich dadurch, dass der Schlitten waagerecht verfahren wird und somit die Gewichtskraft der zu verschiebenden Komponenten senkrecht zur Verschiebrichtung steht. Dennoch kann auch bei dieser Ausgestaltung der Messstrahl über einen Umlenkspiegel aus einer beliebigen Richtung auf das Messobjekt auftreffen. Insbesondere ist es häufig vorteilhaft, mittels eines Umlenkspiegels den Messstrahl von oben auf das Objekt auftreffen zu lassen.

In den Figuren 1 und 2 nicht dargestellt ist eine Auswerte- und Steuereinheit, welche zumindest mit dem Motor 9 und der Kamera 3 verbunden ist und diese grundsätzlich nach dem an sich bekannten Steuerungsschema zur Bestimmung einer Höhengeometriedaten des Objektes 1 mittels eines Kohärenzrasterinterferometers steuert:

Für mehrere vertikale Abstände zwischen den optischen Komponenten des Kohärenzrasterinterferometers und dem Objekt 1 wird jeweils ein Kamerabild aufgenommen, sodass für jedes Pixel der Detektionsfläche der Kamera und somit jedem dem jeweiligen Pixel zugeordneten Messpunkt auf dem Objekt 1 jeweils der Abstand mit dem maximalen Interferenzkontrast (Kohärenzmaximum) bestimmt werden kann und anhand dieser Daten eine Oberflächenhöhenkarte des Objekts 1 erstellt wird.

Wesentlich ist, dass die Weglängenänderungseinheit des in den Figuren 1 und 2 dargestellten Ausführungsbeispiels eines erfindungsgemäßen Kohärenzrasterinterferometers weiterhin eine Wegskala 11 und einen Wegdetektor 12 aufweist.

Die Wegskala 11 ist hierbei ortsfest angeordnet, wohingegen der Wegdetektor 12 an dem Schlitten der optischen Komponenten des Interferometers und der Kamera angeordnet ist. Bei einer linearen Verschiebung mittels des Motors 9 in vertikaler Richtung erfolgt somit synchron eine Verschiebung des Wegdetektors 12 relativ zu der Wegskala 11.

Die Wegskala 11 ist als lineare geradlinige Skala ausgebildet. Sie kann vorzugsweise als Glasmaßstab ausgebildet sein. Der Wegdetektor 12 ist in diesem Beispiel als optischer Wegdetektor ausgebildet, welcher Messsignale abhängig von optischen Markierungen auf der linearen Wegskala 11 erzeugt.

Die Auswerte- und Steuereinheit ist weiterhin mit dem Wegdetektor 12 verbunden, sodass anhand dessen Signale eine exakte Bestimmung des Abstandes zwischen Kohärenzrasterinterferometer und Objekt 1 erfolgt.

Mittels des Motors 9 und des nicht dargestellten Spindelantriebs werden somit die optischen Komponenten des Interferometers, die Lichtquelle 2, die Kamera 3 und der Wegdetektor 12 linear in vertikaler Richtung verschoben. Die vorgenannten Komponenten sind an einem gemeinsamen, starren Schlitten angeordnet, sodass bei der vorgenannten linearen Verschiebung sich die genannten Komponenten relativ zueinander nicht verschieben. Dieser Schlitten zusammen mit den darauf angeordneten Komponenten wird auch als Positioniereinheit bezeichnet.

Das Interferometer gemäß des in den Figuren 1 und 2 dargestellten Ausführungsbeispiels ist als Michelson-Interferometer ausgebildet, bei dem somit die durch den Referenzspiegel 5 gebildete plane Referenzebene und die Messoberfläche auf dem Objekt 1 mit einem Linsensystem, insbesondere umfassend die Abbildungsoptik 6, auf der Detektionsfläche der Kamera 3 überlagert werden. Wie zuvor beschrieben, erfolgt über den Motor 9 und entsprechend dem Spindelantrieb eine vertikale Verschiebung des Interferometers, der Lichtquelle und der Kamera 3 gegenüber dem Objekt 1. Die lineare Verschiebung erfolgt hierbei parallel zum Verlauf des Messstrahls 7 zwischen Strahlteiler 4 und Objekt 1,

Die Lichtquelle 2 weist eine Kohärenzlänge von etwa 8 μm auf.

Bei den in den Figuren 1 und 2 dargestellten Ausführungsbeispielen des erfindungsgemäßen Kohärenzrasterinterferometers kann somit eine erheblich höhere Genauigkeit bei der Bestimmung der Höhengeometriedaten des Objektes 1 erzielt werden, aufgrund der hohen Genauigkeit der Wegmessungen mittels der Wegskala 11 und dem Wegdetektor 12.

Wie zuvor beschrieben, ist es für das Messprinzip von Kohärenzrasterinterferometern in Bezug auf die Messgenauigkeit entscheidend, dass die Erfassung der Interferenzsignale durch die Kamera zu genau bestimmten Positionen, insbesondere der optischen Komponenten des Interferometers, relativ zu dem Objekt erfolgt. Hierzu ist es vorteilhaft, wenn die Bildaufnahme der Kamera getriggert wird und das Erreichen bestimmter Sollpositionen den Kameratrigger auslöst. Hierbei ist zu beachten, dass der Zeitraum zwischen zwei Triggersignalen mindestens eine Zeitspanne beträgt, welche die Kamera mindestens zwischen zwei Aufnahmen benötigt, da sonst Bildinformation verloren gehen kann.

Es liegt im Rahmen der Erfindung, dass die Kamera mit der maximalen Bildrate getriggert wird und bei jedem Trigger die Position mittels des Wegdetektors 12 gemessen und entsprechend dem aufgenommenen Kamerabild mittels der Auswerte- und Steuereinheit zugeordnet wird. Ebenso ist es möglich, dass für vorgegebene Wegpositionen jeweils ein Triggersignal zur Durchführung der Aufnahme eines Kamerabildes erfolgt und sichergestellt ist, dass die Verfahrgeschwindigkeit derart gewählt ist, dass die maximale Bildrate der Kamera nicht überschritten wird.

Das in den Figuren 1 und 2 dargestellte Ausführungsbeispiel eines erfindungsgemäßen Interferometers weist daher eine - nicht dargestellte - Geschwindigkeitsregelung für den Motor 9 auf. Hierdurch kann einerseits eine möglichst hohe Geschwindigkeit beim Verfahren zum Verringern der notwendigen Messzeit erzielt werden und gleichzeitig sichergestellt werden, dass die Maximalbildrate der Kamera nicht überschritten wird.

Hierzu kann die Geschwindigkeitsregelung entweder unabhängig von der Wegdetektion sein oder die Wegdetektion wird verwendet, um eventuelle Abweichungen von der Sollgeschwindigkeit zu detektieren und über eine Rückkopplung auf die Geschwindigkeitsregelung auszugleichen.

Vorzugsweise erfolgt die Steuerung derart, dass eventuelle Positionsschleppfehler nicht ausgeregelt werden, da solch ein Ausregeln zu Geschwindigkeitsspitzen führen kann, welche wiederum ein zu frühes Triggersignal bewirken könnten, bei dem die Kamera nicht aufnahmebereit ist.

Bei dem in den Figuren 1 und 2 dargestellten Ausführungsbeispiel des erfindungsgemäßen Kohärenzrasterinterferometers ist die Wegskala 11 hinsichtlich ihrer Längserstreckung genau auf der optischen Achse des Messstrahls 7 angeordnet, welche wiederum parallel zur Richtung der Linearverschiebung zur Änderung der optischen Weglänge des Messstrahls 7 ist. Hierdurch sind Fehlerquellen beispielsweise durch Nickwinkel aufgrund mechanischer Toleranzen der Linearführungen 10a und 10b ausgeschlossen oder zumindest minimiert.

Weiterhin liegt auch die Linearführung auf der Höhe der optischen Achse. Dies wirkt einem Fehler aufgrund eines Nickens wie vorbeschrieben zusätzlich entgegen.

Weiterhin ist in Figur 2 ersichtlich, dass die Strahlengänge des Interferometers in einer Ebene liegen, welche in Figur 2 senkrecht liegt und senkrecht zur Zeichenebene steht. Die Wegskala 11 ist hinsichtlich ihrer Längserstreckung in dieser Ebene angeordnet, sodass auch hierdurch Messfehler aufgrund etwaiger Kippwinkel bedingt durch mechanische Toleranzen, ausgeschlossen oder zumindest minimiert werden. Hierdurch wird ein Abbe-Fehler minimiert.

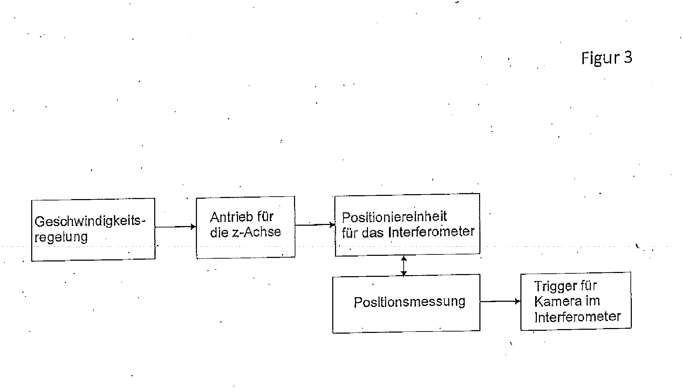

In den Figuren 3 bis 5 sind drei Ausführungsbeispiele eines erfindungsgemäßen Verfahrens zur ortsaufgelösten Vermessung der Höhengeometriedaten eines Objekts mittels eines Kohärenzrasterinterferometers gemäß der Figuren 1 und 2 in schematischen Teilausschnitten dargestellt.

Allen drei Ausführungsbeispielen des erfindungsgemäßen Verfahrens ist gemeinsam, dass die Verfahrensschritte A, B und C wie zuvor beschrieben realisiert werden und darüber hinaus die Messung der Änderung der optischen Weglänge - in diesem Fall des Messstrahls - mittels der Wegskala 11 und dem Wegdetektor 12 erfolgt.

In dem ersten Ausführungsbeispiel gemäß Figur 3 sind Wegpositionen vorgegeben, an denen ein Kamerabild aufgenommen werden soll. Die Wegpositionen beschreiben somit unterschiedliche Abstände zwischen Strahlteiler 4 und Objekt 1.

Zunächst wird eine Maximalgeschwindigkeit bestimmt, sodass die Zeitdifferenz zwischen dem Erreichen jeweils zweier benachbarter Wegpositionen der minimalen Zeitdauer entspricht, welche die Kamera 3 zwischen zwei Aufnahmen benötigt. Diese Maximalgeschwindigkeit wird um einen Sicherheitsfaktor verringert, um Geschwindigkeitsschwankungen der Positioniereinheit tolerieren zu können. Typischweise wird eine Soll-Verfahrgeschwindigkeit gemäß Formel 1 (hier nach $v_S$ aufgelöst)

$$v_S \leq \frac{100\% \, \Delta z_S K_r}{100\% + vp}$$

bestimmt, im vorliegenden Ausführungsbeispiel mit $vp$ = 10%, $\Delta z_S$ =87 nm und $K_r$=30,1 Hz. Die derart bestimmte Verfahrgeschwindigkeit wird über eine Geschwindigkeitsregelung zur Regelung des Motors 9 und damit zum Antrieb der z-Achse, das heißt der Spindel, welche die lineare vertikale Verschiebung zur Änderung der optischen Weglänge des Messstrahls 7 bewirkt, verwendet. Entsprechend erfolgt die Verschiebung der Positioniereinheit für das interferometer. Gleichzeitig erfolgt mittels des Wegdetektors 12 und der Wegskala 11 eine Positionsmessung. Abhängig von den Messsignalen des Wegdetektors 12 erfolgt bei Erreichen der vorgegebenen Wegpositionen ein entsprechendes Senden eines Triggersignals an die Kamera 3 zur Aufnahme eines Messbildes.

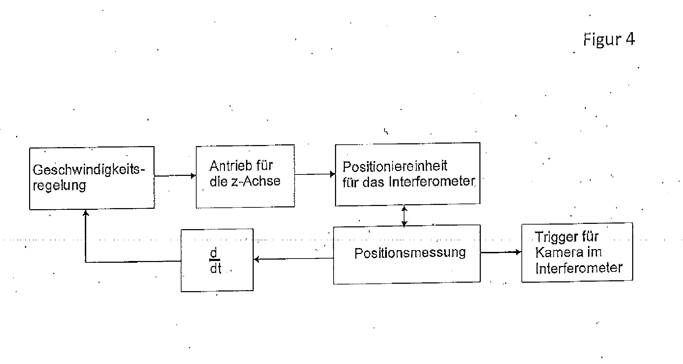

In einer alternativen Ausführungsform eines zweiten Ausführungsbeispiels des erfindungsgemäßen Verfahrens gemäß Figur 4 erfolgt im Gegensatz zu dem in Figur 3 dargestellten Steuerungsschema eine Rückkopplung aus der Positionsmessung auf die Geschwindigkeitsregelung. In diesem Ausführungsbeispiel wird somit während der Messung überprüft, ob die nächste Wegposition zur Aufnahme eines Kamerabildes in einer kürzeren Zeitdauer als die minimal benötigte Zeitdauer der Kamera zwischen zwei Aufnahmen erreicht werden würde. Sofern dies der Fall ist, wird durch Rückkopplung auf die Geschwindigkeitsregelung eine Verlangsamung der Fahrgeschwindigkeit derart durchgeführt, dass die nächste Wegposition zur Aufnahme eines Kamerabildes erst nach Ablauf der zuvor genannten minimalen Zeitspanne der Kamera zwischen zwei Kamerabildern erreicht wird.

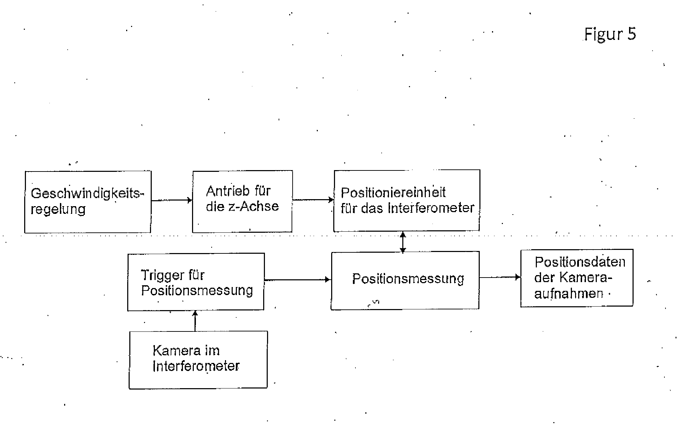

In einem dritten Ausführungsbeispiel des erfindungsgemäßen Verfahrens gemäß Figur 5 erfolgt das Verfahren der Positioniereinheit wie zuvor beschrieben aufgrund einer vorgegebenen Geschwindigkeit durch die Geschwindigkeitsregelung, welche den Antrieb für die z-Achse steuert. In diesem Ausführungsbeispiel sind jedoch keine Wegpositionen zur Aufnahme von Kamerabildern vorgegeben. Stattdessen wird die Kamera mit einer vorgegebenen Aufnahmefrequenz getriggert, welche Aufnahmefrequenz selbstverständlich nicht größer als die maximale Aufnahmefrequenz der Kamera sein darf. Vorzugsweise entspricht die vorgegebene Aufnahmefrequenz in etwa der maximalen Aufnahmefrequenz der Kamera, um eine möglichst kurze Messdauer zu erzielen. Gleichzeitig zur Triggerung der Kamera zur Aufnahme eines Messbildes erfolgt ein Triggersignal zum Auslese der Messsignale des Wegdetektors und somit Bestimmen der aktuellen Position, sodass dem Kamerabild die jeweils vorliegende Weginformation zugeordnet wird.

Bezugszeichenliste

1        Objekt
2        Lichtquelle
3        Kamera
4        Strahlteiler

| 5 | Referenzspiegel |
|---|---|
| 6 | Abbildungsoptik |
| 6a | Lochblende |
| 7 | Messstrahl |
| 8 | Referenzstrahl |
| 9 | Motor |
| 10a, 10b | Linearführungen |
| 11 | Wegskala |
| 12 | Wegdetektor |

**Patentansprüche**

1. Kohärenzrasterinterferometer zur ortsaufgelösten optischen Vermessung der Höhengeometriedaten eines Objekts, umfassend eine Lichtquelle (2), ein interferometer, eine Weglängenänderungseinheit und eine Kamera (3) mit einer Detektionsfläche, welche Detektionsfläche eine Vielzahl von ortsverschiedenen Photosensoren aufweist, wobei das Interferometer mit der Lichtquelle (2) und der Kamera (3) derart zusammenwirkend ausgebildet ist, dass ein von der Lichtquelle (2) erzeugter Ausgangsstrahl in einen Mess- und einen Referenzstrahl (8) aufgespalten, der Messstrahl (7) flächig auf das Objekt (1) auftrifft und der von dem Objekt (1) zumindest teilweise reflektierte und/ oder gestreute Messstrahl (7) auf der Detektionsfläche der Kamera (3) wieder in den Strahlengang des Interferometers eingekoppelt und derart mit dem Referenzstrahl (8) überlagert wird, dass der überlagerte Mess- und Referenzstrahl (8) die Vielzahl von Photosensoren flächig überdecken, und wobei die optische Weglängenänderungseinheit ausgebildet ist zur Änderung der optischen Weglänge des Mess- und/oder Referenzstrahls, **dadurch gekennzeichnet,** **dass** die Weglängenänderungseinheit eine Wegskala (11) und einen Wegdetektor (12) aufweist, welche derart angeordnet sind, dass bei Änderung der optischen Weglänge des Mess- und/oder Referenzstrahls durch die Weglängenänderungseinheit eine synchrone Bewegung des Wegdetektors relativ zur Wegskala (11) erfolgt.

2. Kohärenzrasterinterferometer nach Anspruch 1, **dadurch gekennzeichnet,** **dass** die Wegskala (11) als geradlinige Skala ausgebildet ist.

3. Kohärenzrasterinterferometer nach einem der vorangegangenen Ansprüche, **dadurch gekennzeichnet,** **dass** die Weglängenänderungseinheit zur linearen Verschiebung des Kohärenzrasterinterferometers relativ zu dem Objekt (1) oder zur linearen Verschiebung eines optischen Spiegels im Strahlengang des Mess- oder Referenzstrahles ausgebildet ist und **dass** die Wegskala (11) entlang der Richtung der linearen Verschiebung angeordnet ist.

4. Kohärenzrasterinterferometer nach einem der vorangegangenen Ansprüche, **dadurch gekennzeichnet,** **dass** die Strahlengänge von Mess- und Referenzstrahl (8) in einer Ebene liegen und die Wegskala (11) in dieser Ebene angeordnet ist.

5. Kohärenzrasterinterferometer nach einem der vorangegangenen Ansprüche, **dadurch gekennzeichnet,** **dass** die Wegskala (11) parallel zur optischen Achse des Messstrahls zwischen Interferometer und Objekt (1) angeordnet ist, vorzugsweise, dass die optische Achse des Messstrahls und die Längserstreckung der Wegskala (11) einen Abstand kleiner 1 cm bevorzugt kleiner 2 mm aufweisen.

6. Kohärenzrasterinterferometer nach einem der vorangegangenen Ansprüche, **dadurch gekennzeichnet,** **dass** das Kohärenzrasterinterferometer eine Auswerteeinheit umfasst, welche mit dem Detektor und dem Wegdetektor (12) elektrisch verbunden und derart ausgeführt ist, dass eine Synchronisation der Messsignale des Wegdetektors mit den Messsignalen der Kamera (3) erfolgt, insbesondere, **dass** abhängig von den Signalen des Wegdetektor für vorgegebenen Wegpositionen eine Aufnahme eines Messbildes mittels der Kamera (3) erfolgt und/oder **dass** die Auswerteeinheit Triggersignale an die Kamera (3) zur Aufnahme eines Messbildes gibt und gleichzeitig die Wegposition abhängig von den Messsignalen des Wegdetektors ermittelt.

7. Kohärenzrasterinterferometer nach einem der vorangegangenen Ansprüche, **dadurch gekennzeichnet,** **dass** die Weglängenänderungseinheit eine Geschwindigkeitssteuerung aufweist, mittels welcher eine konstante Geschwindigkeit für die kontinuierliche Weglängenänderung vorgebbar ist.

8.  Kohärenzrasterinterferometer nach einem der vorangegangenen Ansprüche, **dadurch gekennzeichnet, dass** das Interferometer am Messstrahlausgang objektseitig eine Numerische Apertur kleiner 0,1 bevorzugt kleiner 0,025, weiter bevorzugt kleiner 0,013 aufweist.

9.  Kohärenzrasterinterferometer nach einem der vorangegangenen Ansprüche, **dadurch gekennzeichnet, dass** das Interferometer einen planen Referenzspiegel (5) umfasst, welcher Referenzspiegel (5) im Strahlengang des Referenzstrahls angeordnet ist, vorzugsweise, dass die Weglängenänderungseinheit zur linearen Verschiebung des Referenzspiegels bevorzugt parallel zur optischen Achse des Referenzstrahls im Bereich des Referenzspiegels ausgebildet ist und/oder dass die Lichtquelle (2) zur Erzeugung eines Lichtstrahls mit einer Kohärenzlänge kleiner 20 $\mu$m, bevorzugt kleiner 10$\mu$m ausgebildet ist.

10. Verfahren zur ortsaufgelösten Vermessung der Höhengeometriedaten eines Objekts mittels eines Kohärenzrasterinterferometers, vorzugsweise nach einem der vorangegangenen Ansprüche, folgende Verfahrensschritte umfassend:

    A Aufspalten eines von einer Lichtquelle (2) erzeugten Ausgangsstrahls in einen Mess- und einen Referenzstrahl (8), wobei der Referenzstrahl (8) flächig auf das Objekt (1) auftrifft und der zumindest teilweise reflektierte und/oder gestreute Messstrahl (7) flächig mit dem Referenzstrahl (8) auf einer Detektionsfläche einer Kamera (3) überlagert wird, welche Detektionsfläche eine Vielzahl ortsverschiedener Messensoren aufweist,
    B Ändern der optischen Weglänge des Mess- und/oder Referenzstrahls und Aufnahme von Messbildern mittels der Kamera (3) für mehrere unterschiedliche optische Weglängen von Mess- und/oder Referenzstrahl (8),
    C Bestimmen eines Höhenprofils des Objekts anhand der Messsignale der Detektoren für die mehreren Messbilder,
    **dadurch gekennzeichnet,**
    **dass** in Verfahrensschritt B synchron zur Änderung der optischen Weglänge ein Wegdetektor (12) relativ zu einer Wegskala (11) verschoben wird und anhand der Messsignale des Wegdetektors jedem Messbild eine Weginformation zugeordnet wird.

11. Verfahren nach Anspruch 10, **dadurch gekennzeichnet, dass** als Wegskala (11) eine geradlinige Messskala verwendet wird.

12. Verfahren nach einem der Ansprüche 10 bis 11, **dadurch gekennzeichnet, dass** abhängig von den Messsignalen des Wegdetektors für vorgegebene Wegpositionen jeweils ein Messbild aufgenommen wird.

13. Verfahren nach einem der Ansprüche 10 bis 12, **dadurch gekennzeichnet, dass** mit einer vorgegebenen Frequenz Messbilder mittels der Kamera (3) aufgenommen werden und jeweils synchron zur Aufnahme des Messbildes die Wegposition anhand der Messsignale des Wegdetektors ermittelt wird, vorzugsweise, **dass** die vorgegebene Frequenz im Bereich von 80 % bis 100 % , bevorzugt im Bereich von 90 % bis 99 % der maximalen Triggerfrequenz der Photosensoren der Kamera (3) liegt.

14. Verfahren nach einem der Ansprüche 10 bis 13, **dadurch gekennzeichnet, dass** das Ändern der optischen Weglänge in Verfahrensschritt B kontinuierlich mit einer vorgegebenen Geschwindigkeit erfolgt, welche Geschwindigkeit derart gewählt ist, dass für vorgegebene, äquidistante Wegpositionen Messbilder aufgenommen werden und die Aufnahmefrequenz kleiner als eine vorgegebene maximale Aufnahmefrequenz der Kamera (3) ist.

15. Verfahren nach einem der Ansprüche 10 bis 14, **dadurch gekennzeichnet, dass** die Bedingung

$$v_S \leq \frac{100\% \, \Delta z_S K_r}{100\% + vp}$$

erfüllt ist,
mit einer maximal möglichen Kamerabildrate $K_r$ [1/s], einer der Sollgeschwindigkeit der z-Achse $v_S$ [m/s], einem Soll-z-Weg zwischen zwei Kameraaufnahmen $\Delta z_S$ [m] und einer maximalen prozentualen z-Geschwindigkeitsschwankung $vp$ [%].

Figur 1

Figur 2

Figur 3

```
┌──────────────────┐      ┌──────────────┐      ┌─────────────────────┐
│ Geschwindigkeits-│ ───► │ Antrieb für  │ ───► │ Positioniereinheit  │
│ regelung         │      │ die z-Achse  │      │ für das Interferometer│
└──────────────────┘      └──────────────┘      └─────────────────────┘
                                                           ▲
                                                           │
                                                           ▼
                                      ┌──────────────────┐      ┌─────────────────┐
                                      │ Positionsmessung │ ───► │ Trigger für     │
                                      │                  │      │ Kamera im       │
                                      │                  │      │ Interferometer  │
                                      └──────────────────┘      └─────────────────┘
```

Figur 4

```
┌──────────────────┐     ┌──────────────┐     ┌────────────────────┐
│ Geschwindigkeits-│────▶│ Antrieb für  │────▶│ Positioniereinheit │
│ regelung         │     │ die z-Achse  │     │ für das Interferometer│
└──────────────────┘     └──────────────┘     └────────────────────┘
         ▲                                              ▲
         │                                              │
         │         ┌──────────┐     ┌─────────────────┐ ▼           ┌──────────────┐
         │         │    d     │◀────│                 │             │ Trigger für  │
         └─────────│   ───    │     │ Positionsmessung│────────────▶│ Kamera im    │
                   │    dt    │     │                 │             │ Interferometer│
                   └──────────┘     └─────────────────┘             └──────────────┘
```

Figur 5

EP 2 578 988 A1

| Europäisches Patentamt European Patent Office Office européen des brevets | **EUROPÄISCHER RECHERCHENBERICHT** | Nummer der Anmeldung EP 12 18 6888 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/225769 A1 (BANKHEAD ANDREW D [GB] ET AL BANKHEAD ANDREW DOUGLAS [GB] ET AL) 13. Oktober 2005 (2005-10-13) * Absatz [0004] - Absatz [0006] * * Absatz [0045] - Absatz [0069]; Abbildungen 1,3 * | 1-15 | INV. G01B9/02 G01B11/24 |
| X | US 2010/128276 A1 (DE GROOT PETER [US] ET AL) 27. Mai 2010 (2010-05-27) * Absatz [0010] - Absatz [0017] * * Absatz [0069] * * Absatz [0174] - Absatz [0189]; Abbildungen 1-5 * * Absatz [0280] * | 1-15 | |
| X | ARTUR OLSZAK, JOANNA SCHMIT: "High-stability white-light interferometry with reference signal for real-time correction of scanning errors", OPTICAL ENGINEERING, Bd. 42, Nr. 1, 1. Januar 2003 (2003-01-01) , Seite 54, XP55049348, ISSN: 0091-3286, DOI: 10.1117/1.1523942 * das ganze Dokument * | 1-15 | RECHERCHIERTE SACHGEBIETE (IPC) G01B |
| A | US 2002/196450 A1 (OLSZAK ARTUR [US] ET AL) 26. Dezember 2002 (2002-12-26) * Absätze [0004], [0006], [0009] - Absatz [0014] * * Absatz [0033] - Absatz [0039]; Abbildungen 1-3 * | 1-15 | |

Der vorliegende Recherchenbericht wurde für alle Patentansprüche erstellt

| Recherchenort | Abschlußdatum der Recherche | Prüfer |
|---|---|---|
| München | 11. Januar 2013 | Petelski, Torsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 12 18 6888

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2013

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US 2005225769 | A1 | | 13-10-2005 | AU | 2003214404 | A1 | 29-09-2003 |
| | | | | CN | 1653314 | A | 10-08-2005 |
| | | | | EP | 1485675 | A2 | 15-12-2004 |
| | | | | JP | 4414235 | B2 | 10-02-2010 |
| | | | | JP | 2005520144 | A | 07-07-2005 |
| | | | | US | 2005225769 | A1 | 13-10-2005 |
| | | | | WO | 03078925 | A2 | 25-09-2003 |
| US 2010128276 | A1 | | 27-05-2010 | CN | 102057269 | A | 11-05-2011 |
| | | | | EP | 2238430 | A2 | 13-10-2010 |
| | | | | JP | 2011508241 | A | 10-03-2011 |
| | | | | KR | 20100094584 | A | 26-08-2010 |
| | | | | KR | 20120053043 | A | 24-05-2012 |
| | | | | TW | 201037267 | A | 16-10-2010 |
| | | | | US | 2010128276 | A1 | 27-05-2010 |
| | | | | US | 2010128278 | A1 | 27-05-2010 |
| | | | | US | 2010128280 | A1 | 27-05-2010 |
| | | | | US | 2010128283 | A1 | 27-05-2010 |
| | | | | WO | 2010062853 | A2 | 03-06-2010 |
| | | | | WO | 2010062860 | A2 | 03-06-2010 |
| US 2002196450 | A1 | | 26-12-2002 | EP | 1417448 | A1 | 12-05-2004 |
| | | | | US | 6987570 | B1 | 17-01-2006 |
| | | | | US | 2002196450 | A1 | 26-12-2002 |
| | | | | WO | 03001145 | A1 | 03-01-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102005023212